# EUROPEAN PATENT APPLICATION

(11) **EP 4 808 248 A1**
(43) Date of publication of application: **16.09.2026**
(21) Application number: 23958009.5
(22) Date of filing: 09.11.2023
(51) Int. Cl.: H04W 72/541

(54) **COMMUNICATION METHOD, DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/130851
(87) International publication number: WO 2025/097402

(57) **Abstract**

The embodiments of the present disclosure relate to the technical field of communications. Provided are a communication method, a device, and a storage medium. The method comprises: a first AP determining a multi-user request to send TXOP sharing (MU-RTS TXS) trigger frame, wherein the MU-RTS TXS trigger frame comprises a TXOP shared by the first AP to at least one second AP, the MU-RTS TXS trigger frame is used for instructing a neighbor AP to perform data transmission on the basis of each TXOP shared by the first AP, and the second AP is a neighbor AP requiring to perform data transmission in a first TXOP of the first AP; and the first AP sending the MU-RTS TXS trigger frame. The embodiments of the present disclosure can provide a method for instructing, during TXOP sharing, a neighbor AP to perform data transmission.

## Description

### TECHNICAL FIELD

The present disclosure relates to the field of communication technology, and in particular to a communication method, device, and storage medium.

### BACKGROUND

To achieve rational allocation of communication resources, improve communication quality and access efficiency, and realize better network performance, researchers have proposed a Transmission Opportunity Sharing (TXOP Sharing, TXS) mechanism.

In this mechanism, the holder (Access Point, AP) of a TXOP may act as a Sharing AP to allocate its reserved TXOPs to other APs, and other APs, acting as Shared APs, may then perform data transmission with their associated STAs during the TXOPs allocated by the Sharing AP. However, communication interference between APs still exists under this mechanism, and further research is needed about how to improve further the AP communication quality.

### SUMMARY

The embodiments of the present disclosure provide a communication method, device, and storage medium, which help to provide a way for instructing a neighboring AP to perform data transmission when allocating a TXOP.

In a first aspect, the embodiments of the present disclosure provide a communication method, the method including: determining, by a first AP, a Multi-User Request to Send TXOP Sharing (MU-RTS TXS) Trigger, where the MU-RTS TXS Trigger frame includes a TXOP allocated by the first AP to at least one second AP, the MU-RTS TXS Trigger frame is used to instruct a neighboring AP to perform data transmission according to the TXOP allocated by the first AP, and the second AP is a neighboring AP that requires performing data transmission during a first TXOP of the first AP; and transmitting, by the first AP, the MU-RTS TXS Trigger frame.

In a second aspect, the embodiments of the present disclosure provide a communication method, the method including: receiving, by a third AP, a MU-RTS TXS Trigger frame, where the MU-RTS TXS Trigger frame includes a TXOP allocated by a first AP to at least one second AP, the MU-RTS TXS Trigger frame is used to instruct a neighboring AP to perform data transmission according to the TXOP allocated by the first AP, each second AP is a neighboring AP that requires performing data transmission during a first TXOP of the first AP, and the third AP is any neighboring AP of the first AP; and performing, by the third AP, data transmission according to the TXOP allocated by the first AP.

In a third aspect, the embodiments of the present disclosure provide an Access Point (AP), including a processing module and a transceiving module.

The processing module is configured to determine a MU-RTS TXS Trigger frame, where the MU-RTS TXS Trigger frame includes a TXOP allocated by a first AP to at least one second AP, the MU-RTS TXS Trigger frame is used to instruct a neighboring AP to perform data transmission according to the TXOP allocated by the first AP, and the second AP is a neighboring AP that requires performing data transmission during a first TXOP of the first AP.

The transceiving module is configured to transmit the MU-RTS TXS Trigger frame.

In a fourth aspect, the embodiments of the present disclosure provide an Access Point (AP), including: a transceiving module, configured to receive an MU-RTS TXS Trigger frame, where the MU-RTS TXS Trigger frame includes a TXOP allocated by a first AP to at least one second AP, the MU-RTS TXS Trigger frame is used to instruct a neighboring AP to perform data transmission according to the TXOP allocated by the first AP, and each second AP is a neighboring AP that requires performing data transmission during a first TXOP of the first AP; and a processing module, configured to perform data transmission according to the TXOP allocated by the first AP.

In a fifth aspect, the embodiments of the present disclosure provide an Access Point (AP) including one or more processors. The AP is configured to perform the communication method provided in the first aspect of the embodiments of the present disclosure.

In a sixth aspect, the embodiments of the present disclosure provide an Access Point (AP) including one or more processors. The AP is configured to perform the communication method provided in the second aspect of the embodiments of the present disclosure.

In a seventh aspect, the embodiments of the present disclosure provide a storage medium having instructions stored thereon. When the instructions are executed on a communication device, the communication device is caused to perform the communication method provided in the first aspect of the embodiments of the present disclosure.

In an eighth aspect, the embodiments of the present disclosure provide a communication system including a first AP and a third AP. The first AP is configured to perform the method described in the first aspect, and the third AP is configured to perform the method described in the second aspect.

Based on the communication method, device, and storage medium provided in the embodiments of the present disclosure, an approach can be provided for instructing the neighboring AP to perform data transmission when the AP allocates a TXOP.

Additional aspects and advantages of the embodiments of the present disclosure will be set forth in part in the following description, and will be obvious from the following description, or may be learned by practice of the present disclosure.

### BRIEF DESCRIPTION OF THE DRAWINGS

To more clearly illustrate the technical solutions in the embodiments of the present disclosure, the accompanying drawings used in the description of the embodiments of the present disclosure will be briefly introduced below. It shall be noted that the drawings described below are only some embodiments of the present disclosure. For those skilled in the art, other drawings may be obtained based on these drawings without creative effort.
Figs. 1a-1b are schematic diagrams of a communication scenario shown in an embodiment of the present disclosure;
Fig. 2 is a schematic diagram of the architecture of a communication system shown in an embodiment of the present disclosure;
Fig. 3 is an interactive schematic diagram of a communication method shown in an embodiment of the present disclosure;
Fig. 4 is a flowchart of a communication method shown in an embodiment of the present disclosure;
Fig. 5 is another flowchart of a communication method shown in an embodiment of the present disclosure;
Fig. 6 is a schematic structural diagram of an AP proposed in an embodiment of the present disclosure;
Fig. 7 is a schematic structural diagram of an AP proposed in an embodiment of the present disclosure;
Fig. 8 is a schematic structural diagram of a communication device proposed in an embodiment of the present disclosure; and
Fig. 9 is a schematic structural diagram of a chip proposed in an embodiment of the present disclosure.

### DETAILED DESCRIPTION OF THE EMBODIMENTS

The embodiments of the present disclosure provide a communication method, device, and storage medium.

In a first aspect, the embodiments of the present disclosure provide a communication method performed by a first access point (AP). The method includes: determining, by the first AP, a Multi-User Request to Send TXOP Sharing (MU-RTS TXS) Trigger frame, where the MU-RTS TXS Trigger frame includes a TXOP allocated by the first AP to at least one second AP, the MU-RTS TXS Trigger frame is used for instructing a neighboring AP to perform data transmission according to the TXOPs allocated by the first AP, and the second AP is a neighboring AP that requires performing data transmission during the first TXOP of the first AP; and transmitting, by the first AP, the MU-RTS TXS Trigger frame.

In the above embodiments, when the first AP allocates the TXOP to the second AP among the neighboring APs via the MU-RTS TXS Trigger frame, the neighboring AP is enabled to determine the TXOP allocated by the first AP to each second AP via the MU-RTS TXS Trigger frame, and then perform data transmission according to the TXOP allocated by the first AP. This facilitates more rational allocation of communication resources, avoids transmission interference between APs, and improves AP access efficiency.

In conjunction with some embodiments of the first aspect, in some embodiments, the aforementioned MU-RTS TXS Trigger frame includes at least one user information field, each of which includes an allocation duration field. Each allocation duration field indicates a first transmission duration of the TXOP allocated to one of the second APs.

The first transmission duration corresponding to each of the second APs is greater than or equal to a second transmission duration required by the respective second AP to perform data transmission during the first TXOP. The first and second transmission durations corresponding to each of the second APs are less than a third transmission duration of the first TXOP.

In the above embodiments, the first AP may allocate a TXOP to one of the second APs separately through the allocation duration field in each user information field. This helps the neighboring AP to quickly determine the neighboring AP corresponding to each user information field, improving TXOP allocating efficiency. Furthermore, the first transmission duration of the TXOP allocated by the first AP to each second AP is greater than or equal to the second transmission duration required by the second AP, and is less than the third transmission duration of the first TXOP. This ensures that each second AP can complete data transmission during the first TXOP, guaranteeing the communication efficiency and integrity of the neighboring AP.

In conjunction with some embodiments of the first aspect, in some embodiments, the method further includes: transmitting, by the first AP, a first frameframe, where the first frameframe is used to discover whether a neighboring AP requires the first AP to allocate a TXOP during the first TXOP.

The first frameframe includes at least one of the following:
a first information field, where the first information field indicates a third transmission duration, and the third transmission duration is the remaining transmission duration of the first TXOP when the first AP transmits the first frame;
a first identifier, where the first identifier indicates, through a first value, that the first TXOP supports allocating to a neighboring AP, and through a second value, that the first TXOP does not support allocating to any neighboring AP.

In the above embodiments, the first AP can discover whether the neighboring AP requires the first AP to allocate a TXOP via the first frame, which is beneficial to improving the allocating efficiency of the TXOP. The first AP may indicate the third transmission duration of the first TXOP and whether the first TXOP supports allocating to the neighboring AP through the first frame. This enables the neighboring AP receiving the first frame to accurately determine whether the first AP is required to allocate the TXOP during the first TXOP based on the third transmission duration and based on whether the first TXOP supports allocating to the neighboring AP, helping to further improve the allocating efficiency of the TXOP.

In conjunction with some embodiments of the first aspect, in some embodiments, the method further includes: receiving, by the first AP, a second frame transmitted by at least one second AP, where each second frame indicates that a respective neighboring AP requires the first AP to allocate a TXOP during the first TXOP.

In the above embodiments, the second AP can indicate the need for the first AP to allocate a TXOP via the second frame. This helps the first AP to quickly determine the second AP among the neighboring APs that requires allocating of a TXOP based on the second frame, thereby allocating the TXOP to each second AP and improving allocating efficiency of the TXOP.

In conjunction with some embodiments of the first aspect, in some embodiments, each second frame includes a second information field, and the second information field indicates a second transmission duration required by the respective second AP to perform data transmission during the first TXOP.

In the above embodiments, the first AP can determine the second transmission duration required by each second AP to perform data transmission via the second frame, and thus determine the first transmission duration of the TXOP allocated by each second AP based on the second transmission duration for each second AP to perform data transmission. This helps to improve the efficiency and accuracy in determining the first transmission duration, thereby ensuring that the first transmission duration corresponding to each second AP can meet the data transmission requirements of the respective second AP and guaranteeing communication quality.

In conjunction with some embodiments of the first aspect, in some embodiments, transmitting, by the first AP, the MU-RTS TXS Trigger frame includes: after receiving the second frame transmitted by each second AP, transmitting, by the first AP, the MU-RTS TXS Trigger frame subsequent to a Short Interframe Space (SIFS).

In the above embodiments, the first AP can transmit the MU-RTS TXS Trigger frame subsequent to a Short Interframe Space (SIFS) after receiving each second frame, thereby avoiding collisions and conflicts between the second frame and the MU-RTS TXS Trigger frame, and ensuring that TXOP allocating can be achieved through the MU-RTS TXS Trigger frame.

In a second aspect, the embodiments of the present disclosure propose a communication method that may be performed by a third AP. The method includes: receiving, by the third AP, an MU-RTS TXS Trigger frame, where the MU-RTS TXS Trigger frame includes TXOPs allocated by a first AP to at least one second AP, the MU-RTS TXS Trigger frame is used for instructing the neighboring AP to perform data transmission according to the respective TXOPs allocated by the first AP, each second AP is a neighboring AP that requires performing data transmission during a first TXOP of the first AP, and the third AP is any neighboring AP of the first AP; and performing, by the third AP, data transmission according to the respective TXOPs allocated by the first AP.

In the above embodiments, when the first AP allocates a TXOP to a second AP among the neighboring APs via the MU-RTS TXS Trigger frame, the third AP may determine the TXOPs allocated by the first AP to each second AP through the MU-RTS TXS Trigger frame, and then perform data transmission according to the respective TXOPs allocated by the first AP. This facilitates more rational allocation of communication resources, avoids transmission interference between APs, and improves AP access efficiency.

In conjunction with some embodiments of the second aspect, in some embodiments, the aforementioned MU-RTS TXS Trigger frame includes at least one user information field, each of which includes an allocation duration field. Each allocation duration field indicates the first transmission duration for a TXOP allocated to one of the second APs.

The first transmission duration corresponding to each of the second APs is greater than or equal to a second transmission duration required by the respective second AP to perform data transmission during the first TXOP. The first and second transmission durations corresponding to each of the second APs are less than the third transmission duration of the first TXOP.

In the above embodiments, the first AP can allocate a TXOP to one of the second APs separately through the allocation duration field in each user information field. This facilitates the neighboring AP in quickly determining the neighboring AP corresponding to each user information field, improving TXOP allocating efficiency. Furthermore, the first transmission duration of the TXOP allocated by the first AP to each second AP is greater than or equal to the second transmission duration required by the second AP, and is less than the third transmission duration of the first TXOP. This ensures that each second AP can complete data transmission during the first TXOP, guaranteeing the communication efficiency and integrity of the neighboring AP.

In conjunction with some embodiments of the second aspect, in some embodiments, performing, by the third AP, data transmission based on the TXOP allocated by the first AP, includes:
when the first AP allocates the TXOP to the third AP, the third AP performs data transmission during a first transmission duration of the TXOP allocated by the first AP to the third AP, and does not perform data transmission outside the respective first transmission duration;
when the first AP does not allocate the TXOP to the third AP, and the communication range of the third AP overlaps with the communication range of at least one fourth AP among the second APs, the third AP does not perform data transmission during the first transmission duration corresponding to each fourth AP;
when the first AP does not allocate the TXOP to the third AP, and the communication range of the third AP does not overlap with the communication range of at least one fifth AP among the second APs, the third AP stops data transmission at the end of the first transmission duration corresponding to each fifth AP.

In the above embodiments, when the first AP allocates the TXOP to the third AP, the third AP can perform data transmission only during the first transmission duration of the TXOP allocated by the first AP, thereby ensuring the data transmission of the third AP while avoiding interference with the data transmission of other APs. If the first AP does not allocate the TXOP to the third AP, and a fourth AP exists whose communication range overlaps with that of the third AP, the third AP may refrain from data transmission during the first transmission duration corresponding to the fourth AP, so as to avoid interfering with the data transmission of the fourth AP. If the first AP does not allocate the TXOP to the third AP, and there is a fifth AP whose communication range overlaps with that of the third AP, the third AP may stop data transmission when the first transmission duration of the fifth AP ends, so as to avoid interfering with the data transmission of the first AP.

In conjunction with some embodiments of the second aspect, in some embodiments, the method further includes: receiving a first frame by the third AP, where the first frame is used to discover whether the neighboring AP requires the first AP to allocate the TXOP during the first TXOP.

The first frame includes at least one of the following:
a first information field, which indicates a third transmission duration, the third transmission duration being the remaining transmission duration of the first TXOP when the first AP transmits the first frame;
a first identifier, which indicates, through a first value, that the first TXOP supports allocating to the neighboring AP, and through a second value, that the first TXOP does not support allocating to any neighboring AP.

In the above embodiments, the first AP can discover whether the neighboring AP requires the first AP to allocate the TXOP via the first frame, which helps to improve the allocating efficiency of the TXOP. The third AP can determine the third transmission duration of the first TXOP and determine whether the first TXOP supports allocating to the neighboring AP via the first frame, thereby determining whether the first AP is required to allocate the TXOP to it during the first TXOP, and further helping to improve the allocating efficiency of the TXOP.

In conjunction with some embodiments of the second aspect, in some embodiments, the method further includes:
when the third AP has no need for performing data transmission during the first TXOP, the third AP does not respond to the first frame;
when the third AP requires performing data transmission during the first TXOP, if the first TXOP does not support allocating to any neighboring AP, or if the second transmission duration required by the third AP to perform data transmission during the first TXOP is greater than the third transmission duration of the first TXOP, the third AP does not respond to the first frame;
when the third AP requires performing data transmission during the first TXOP, if the first TXOP supports allocating to the neighboring AP, and the second transmission duration required by the third AP to perform data transmission during the first TXOP is less than the third transmission duration of the first TXOP, the third AP transmits a second frame, where the second frame indicates that the third AP requires the first AP to allocate the TXOP during the first TXOP.

In the above embodiments, the third AP may not respond to the first frame when data transmission is not required during the first TXOP, or when the first TXOP does not support allocating to any neighboring APs, or when the second transmission duration required for data transmission is less than the third transmission duration of the first TXOP. The third AP may indicate the need for the first AP to allocate the TXOP via the second frame, in cases where data transmission is required during the first TXOP, the first TXOP supports allocating to neighboring APs, and the second transmission duration required for data transmission is less than the third transmission duration of the first TXOP. This approach improves the response mechanism of neighboring APs after receiving the first frame, facilitating the rapid identification by the first AP of neighboring APs that require allocating of the TXOP.

In conjunction with some embodiments of the second aspect, in some embodiments, the second frame includes a second information field, which indicates the second transmission duration required by the third AP to perform data transmission during the first TXOP.

In the above embodiments, the third AP may determine the second transmission duration required for data transmission via the second frame, thereby enabling the first AP to determine the first transmission duration of the TXOP allocated by the third AP based on the second transmission duration of the data transmission performed by each third AP, and improving the efficiency and accuracy in determining the first transmission duration, thereby ensuring that the first transmission duration corresponding to the third AP can meet the data transmission requirements of the third AP and guaranteeing communication quality.

In a third aspect, the embodiments of the present disclosure provide an access point (AP), including: a processing module, configured to determine an MU-RTS TXS Trigger frame, where the MU-RTS TXS Trigger frame includes TXOPs allocated by a first AP to at least one second AP, the MU-RTS TXS Trigger frame is used for instructing the neighboring AP to perform data transmission according to the respective TXOPs allocated by the first AP, and the second AP is a neighboring AP that requires performing data transmission during the first TXOP of the first AP; and a transceiving module, configured to transmit the MU-RTS TXS Trigger frame.

In a fourth aspect, the embodiments of the present disclosure provide an access point (AP), including: a transceiving module, configured to receive an MU-RTS TXS Trigger frame, where the MU-RTS TXS Trigger frame includes TXOPs allocated by a first AP to at least one second AP, the MU-RTS TXS Trigger frame is used for instructing the neighboring AP to perform data transmission according to the respective TXOPs allocated by the first AP, and each of the second APs is a neighboring AP that requires performing data transmission during the first TXOP of the first AP; and a processing module, configured to perform data transmission according to the respective TXOPs allocated by the first AP.

In a fifth aspect, the embodiments of the present disclosure provide an access point (AP) including one or more processors.

The AP is configured to perform the communication method(s) provided by the first aspect and example embodiments of the first aspect.

In a sixth aspect, the embodiments of the present disclosure provide an AP including one or more processors.

The AP is configured to perform the communication method(s) provided by the second aspect and example embodiments of the second aspect.

In a seventh aspect, the embodiments of the present disclosure provide a communication device including one or more processors.

The communication device may act as a first AP to perform the communication method(s) provided by the first aspect and example embodiments of the first aspect, or act as a third AP to perform the communication method(s) provided by the second aspect and example embodiments of the second aspect.

In an eighth aspect, the embodiments of the present disclosure provide a storage medium storing instructions. When the instructions are executed on a communication device, the communication device is caused to perform the method(s) described by the first aspect, the second aspect, example embodiments of the first aspect, and example embodiments of the second aspect.

In a ninth aspect, the embodiments of the present disclosure provide a program product. When the program product is executed by a communication device, the communication device is caused to perform the method(s) described by the first aspect, the second aspect, example embodiments of the first aspect, and example embodiments of the second aspect.

In a tenth aspect, the embodiments of the present disclosure provide a computer program. When the computer program is run on a computer, the computer is caused to perform the method(s) described in the first aspect, the second aspect, example embodiments of the first aspect, and example embodiments of the second aspect.

In an eleventh aspect, the embodiments of the present disclosure provide a chip or chip system. The chip or chip system includes processing circuitry configured to perform the method(s) described in the first aspect, the second aspect, example embodiments of the first aspect, and example embodiments of the second aspect.

In a twelfth aspect, the embodiments of the present disclosure provide a communication system including a first access point (AP) and a third AP. The first AP is configured to perform the method(s) described in the first aspect and example embodiments of the first aspect, and the third AP is configured to perform the method(s) described in the second aspect and example embodiments of the second aspect.

It is understood that the AP, communication system, communication device, storage medium, program product, computer program, chip, or chip system described above are all used to perform the method(s) proposed in the embodiments of the present disclosure. Therefore, the beneficial effects that can be achieved may be referred to the beneficial effects in the corresponding methods, and will not be repeated here.

The embodiments of the present disclosure provide a communication method, a device, and a storage medium. In some embodiments, terms such as communication method and information processing method are interchangeable, terms such as communication device and information processing device are interchangeable, and terms such as information processing system and communication system are interchangeable.

The embodiments of the present disclosure are not exhaustive, but merely illustrative of some embodiments, and are not intended to limit the protection scope of the present disclosure. Unless contradictory, each step in a particular embodiment may be implemented as an independent embodiment, and the steps may be arbitrarily combined. For example, a solution after removing some steps in a particular embodiment may also be implemented as an independent embodiment, and the order of the steps in a particular embodiment may be arbitrarily interchanged. Furthermore, the example implementations in a particular embodiment may be arbitrarily combined. Moreover, the embodiments may be arbitrarily combined. For example, some or all steps of different embodiments may be arbitrarily combined, and a particular embodiment may be arbitrarily combined with example implementations of other embodiments.

In the embodiments of the present disclosure, unless otherwise specified or logically conflicting, the terminology and/or descriptions between various embodiments are consistent and may be mutually referenced. Technical features in different embodiments may be combined to form new embodiments based on their inherent logical relationships.

The terminology used in the embodiments of the present disclosure is only for the purpose of describing specific embodiments and is not intended to limit the present disclosure.

In the embodiments of the present disclosure, unless otherwise stated, elements expressed in the singular form, such as "a", "an", "this", "the", "foregoing" "described", "such", etc., may mean "one and only one", "one or more", "at least one", etc. For example, when using articles such as "a", "an", "the", etc., in translation, the noun following the article may be understood as either a singular expression or a plural expression.

In the embodiments of the present disclosure, "multiple" refers to two or more.

In some embodiments, terms such as "at least one of", "one or more", "a plurality of", "multiple", etc., may be used interchangeably.

In some embodiments, the notation "at least one of A or B", "A and/or B", "A in one case, B in another case", and "in response to one case A, in response to another case B" may, depending on the context, include the following technical solutions: in some embodiments, A (executed independently of B); in some embodiments, B (executed independently of A); in some embodiments, execution is selected from A and B (A and B are selectively executed); in some embodiments, both A and B are executed. The same applies when there are more branches such as A, B, C, etc.

In some embodiments, the notation "A or B" may, depending on the context, include the following technical solutions: in some embodiments, A (executed independently of B); in some embodiments, B (executed independently of A); in some embodiments, execution is selected from A and B (A and B are selectively executed). The same applies when there are more branches such as A, B, C, etc.

The prefixes such as "first" and "second" in the embodiments of the present disclosure are merely for distinguishing different descriptive objects and do not restrict the position, order, priority, number, or content of the descriptive objects. For descriptions of the descriptive objects, references may be made to descriptions of the claims or the context of the embodiments. The use of prefixes should not constitute unnecessary restrictions. For example, if the descriptive object is a "field", the ordinal numbers before "field" in "first field" and "second field" do not restrict the position or order of the "fields". "First" and "second" do not restrict whether the "fields" they modify are in the same message, nor do they restrict the order of "first field" and "second field". Similarly, if the descriptive object is a "level", the ordinal numbers before "level" in "first level" and "second level" do not restrict the priority between "levels". Furthermore, the number of descriptive objects is not limited by ordinal numbers and may be one or more. Taking "first device" as an example, there may be one or more "devices". Furthermore, the objects modified by different prefixes may be the same or different. For example, if the object being described is "device", then "first device" and "second device" may be the same device or different devices, and their types may be the same or different. Similarly, if the object being described is "information", then "first information" and "second information" may be the same information or different information, and their contents may be the same or different.

In some embodiments, "including A", "containing A", "for indicating A", and "carrying A" may be interpreted as directly carrying A or indirectly indicating A.

In some embodiments, terms such as "in response to", "in response to determining", "in the case of", "when","while", "if","in case that", etc., may be interchanged.

In some embodiments, terms such as "greater than", "greater than or equal to", "not less than", "more than", "more than or equal to", "not smaller than", "higher than", "higher than or equal to", "not lower than", and "above" may be used interchangeably. Similarly, terms such as "less than", "less than or equal to", "not greater than", "smaller than", "smaller than or equal to", "not more than", "lower than", "lower than or equal to", "not higher than", and "below" may be used interchangeably.

In some embodiments, the acquisition of data, information, etc., may comply with the laws and regulations of the country where the user is located.

In some embodiments, data, information, etc., may be acquired after obtaining the user's consent.

Furthermore, each element, each row, or each column in the tables of the embodiments of the present disclosure may be implemented as an independent embodiment, and the combination of any element, any row, or any column may also be implemented as an independent embodiment.

In a Wi-Fi system, a device that successfully competes for a channel may reserve a period of time for data transmission, and this period of time is called a transmission opportunity (TXOP). A device that successfully competes for and reserves a TXOP is called the TXOP holder. During a TXOP, the TXOP holder can actively transmit data, while other devices can only receive data or transmit response frames for their received data. When an AP is a TXOP holder, it can allocate a partial time of its reserved TXOP to its associated STAs, and STAs can transmit uplink data to the AP or transmit data to other STAs with which it has established a P2P link during the allocated TXOP time.

The AP holding the TXOP may act as a Sharing AP to allocate its reserved TXOP to other APs. However, the existing mechanism for allocating TXOPs between APs may still lead to communication interference issues between APs.

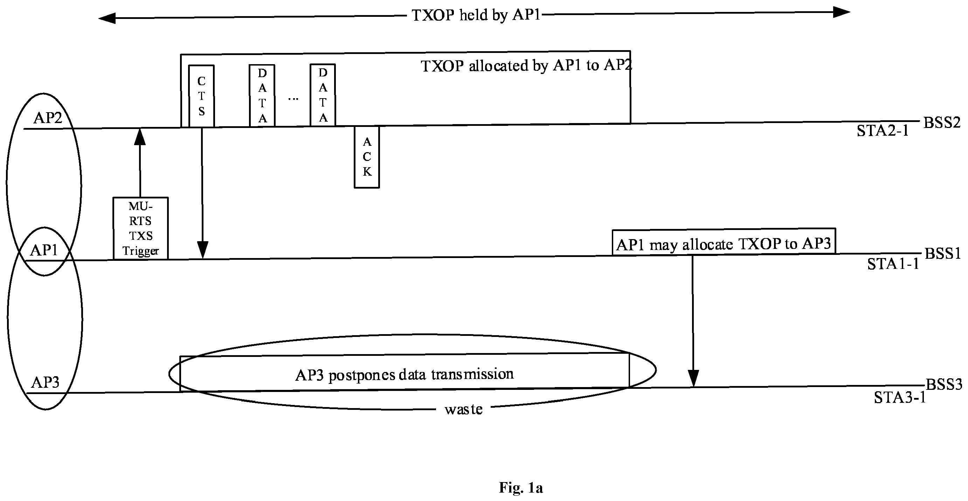

For example, as shown in Fig. 1a, if AP2 and AP3 are both neighboring APs of AP1 and are within the communication range of AP1, but AP2 and AP3 are not within the communication range of each other, when AP1 allocates a reserved TXOP to AP2 using a Multi-User Request to Send TXOP Sharing (MU-RTS TXS) Trigger frame, AP2 may send a Clear To Send (CTS) frame to AP1 and then perform data transmission with the associated STA2-1. After receiving the data transmitted by AP2, STA2-1 may send an Acknowledgment frame to acknowledge receipt of the data.

If AP3 detects a MU-RTS TXS Trigger frame sent by AP1 but the target is not itself, AP3 will pause or postpone data transmission during the TXOP allocated by AP1 to AP2, so as to avoid interfering with the data transmission of AP2 during the TXOP allocated by AP1. In fact, after AP2 obtains the TXOP allocated by AP1, the transmission of AP2 within BSS2 and the transmission of AP3 within BSS3 do not affect each other. If AP3 pauses data transmission during this period, it will waste communication resources.

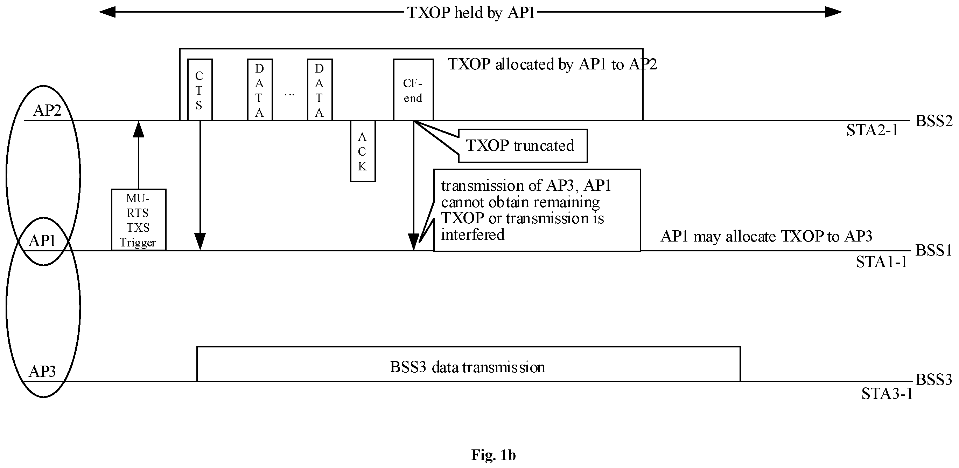

For example, as shown in Fig. 1b, when AP2 and AP3 are both neighboring APs of AP1 and are both within the communication range of AP1, but AP2 and AP3 are not within the communication range of each other, when AP1 allocates the reserved TXOP to AP2 by using a Multi-User Request to Send TXOP Sharing Trigger (MU-RTS TXS Trigger) frame, AP2 may send a Clear To Send (CTS) frame to AP1 and then perform data transmission with the associated STA2-1. After receiving the data transmitted by AP2, STA2-1 may send an Acknowledgment frame to acknowledge receipt of the data. If AP3 detects the MU-RTS TXS Trigger frame sent by AP1 but the target is not itself, it will still maintain data transmission within BSS3. When AP2 completes data transmission ahead of schedule during the acquired TXOP, it will send a Contention-Free (CF-end) frame to AP1 to return the remaining TXOP. At this time, data transmission by AP3 may prevent AP1 from obtaining the remaining TXOP or may interfere with the data transmission of AP1 within BSS1.

To solve the above problems, the technical solutions in the embodiments of the present disclosure will be clearly and completely described below with reference to the accompanying drawings. It shall be noted that the described embodiments are only some of the embodiments of the present disclosure, not all of them. All other embodiments obtained by those skilled in the art based on the embodiments of the present disclosure without creative effort are within the protection scope of the present disclosure.

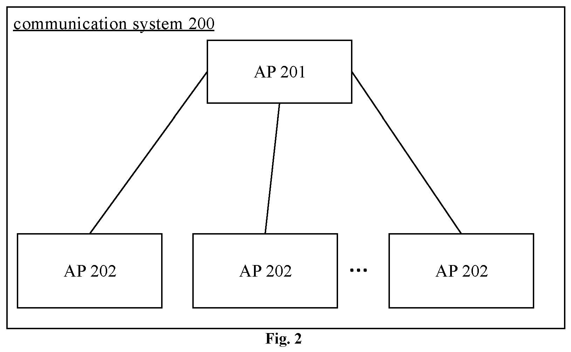

Fig. 2 is a schematic diagram of the architecture of a communication system shown according to an embodiment of the present disclosure.

As shown in Fig. 2, the communication system 200 includes an AP 201 and at least one AP 202.

AP 201 and AP 202 may be independent devices or devices supporting Multi-Link Operation (MLO) technology. For example, AP 201 and AP 202 may be AP MLD.

In some embodiments, AP 201 and AP 202 may be terminal devices or network devices with wireless fidelity chips.

It is understood that the communication system described in the embodiments of the present disclosure is for the purpose of more clearly illustrating the technical solutions in the embodiments of the present disclosure and does not constitute a limitation on the technical solutions proposed in the embodiments of the present disclosure. Those skilled in the art will recognize that, with the evolution of system architecture and the emergence of new service scenarios, the technical solutions proposed in the embodiments of the present disclosure are equally applicable to similar technical problems.

The following embodiments of the present disclosure may be applied to the communication system 200 shown in Fig. 2, or to some of its components, but are not limited thereto. The components shown in Fig. 2 are illustrative. The communication system may include all or some of the components in Fig. 2, or other components not shown in Fig. 2. The number and form of each component are arbitrary. Each component may be physical or virtual. The link relationships between the components are illustrative. The components may be linked or not linked, and the links may be of any type, including direct links and indirect links, wired links and wireless links.

The embodiments of the present disclosure may be applied to Wireless Local Area Network (WLAN), for example applied to IEEE 802.11 system standard, including 802.11a/b/g standard, 802.11n standard, 802.11ac standard, 802.11ax standard, or their next generations, such as 802.11bn, 802.11bf, 802.11be standard (also known as Wi-Fi 7, Extremely High-Throughput (EHT) standard), or even later standards. Alternatively, the embodiments of the present disclosure may also be applied to WLAN systems such as Internet of Things (IoT) networks or Vehicle-to-X (V2X) networks. It is noted that the embodiments of the present disclosure may also be applied to other possible communication systems, such as Long Term Evolution (LTE) system, LTE Frequency Division Duplex (FDD) system, LTE Time Division Duplex (TDD) system, Universal Mobile Telecommunication System (UMTS), Worldwide Interoperability for Microwave Access (WiMAX) communication system, future 5th generation (5G) communication system, etc.

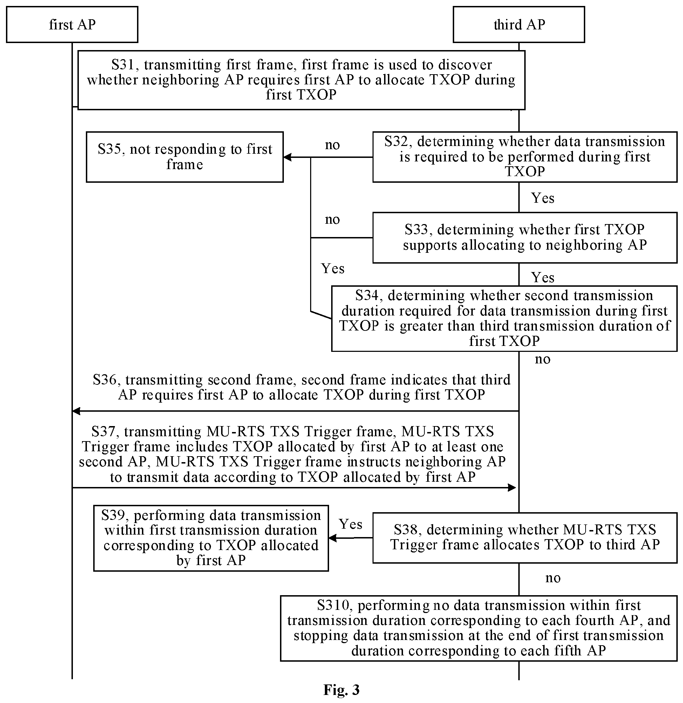

Fig. 3 is an interactive schematic diagram of a communication method shown in an embodiment of the present disclosure. The communication method shown in Fig. 3 includes steps S31, S32, S33, S34, S35, S36, S37, S38, S39, and S310.

Step S31, transmitting, by a first AP, a first frame, where the first frame is used to discover whether the neighboring AP requires the first AP to allocate a TXOP during a first TXOP.

In some embodiments, the first AP is the holder of the TXOP, also referred to as a Sharing AP, the first TXOP is a TXOP reserved by the first AP, and the first AP transmits the first frame to all the neighboring APs.

In some embodiments, the first frame is used to discover whether a neighboring AP requires the first AP to allocate the TXOP during the first TXOP, that is, to determine the neighboring AP which requires the first AP to allocate the TXOP for data transmission.

In some embodiments, the first frame may include at least one of a first information field and a first identifier.

The first information field indicates the third transmission duration of the first TXOP.

The first identifier indicates, through a first value, that the first TXOP supports allocating to the neighboring AP. That is, the first identifier indicates through the first value that a portion of the third transmission duration of the first TXOP may be allocated to the neighboring AP. The first identifier indicates, through a second value, that the first TXOP does not support allocating to the neighboring AP. That is, the first identifier indicates through the second value that the third transmission duration of the first TXOP is not allowed to be allocated to the neighboring AP.

The first value and the second value are different. For example, the first value may be 1 and the second value may be 0, which is not limited here.

For example, the first identifier may be the AP-2-AP TXS identifier, or it may be other identifiers in the first frame, which is not limited here.

Step S32: determining, by the third AP, whether data transmission is required to be performed during the first TXOP.

In some embodiments, the third AP is any neighboring AP of the first AP.

In some embodiments, after receiving the first frame, the third AP may determine whether data transmission should be performed during the first TXOP, i.e., determining whether the first AP is required to allocate the TXOP to the third AP during the first TXOP, for performing data transmission based on the TXOP allocated by the first AP.

If the third AP determines that data transmission is not required during the first TXOP, the third AP executes step S35. If the third AP determines that data transmission is required during the first TXOP, the third AP executes step S33.

Step S33, determining, by the third AP, whether the first TXOP supports allocating to the neighboring AP.

In some embodiments, the third AP may determine whether the first TXOP supports allocating to the neighboring AP based on the first frame, that is, whether the first AP supports allocating the TXOP to the neighboring AP during the first TXOP.

As an example, when the first frame includes a first identifier, if the identification value of the first identifier is a first value, the third AP determines that the first TXOP supports allocating to the neighboring APs; and if the identification value of the first identifier is a second value, the third AP determines that the first TXOP does not support allocating to any neighboring AP.

If the third AP determines that the first TXOP does not support allocating to the neighboring AP, the third AP executes step S35. If the third AP determines that the first TXOP supports allocating to the neighboring AP, the third AP executes step S34.

It should be noted that the determination processes in steps S32 and S33 may be interchanged or performed simultaneously. That is, the third AP executes step S35 when it determines that data transmission during the first TXOP is unnecessary or that the first TXOP does not support allocating to the neighboring APs; and the third AP executes step S34 when the third AP determines that data transmission during the first TXOP is necessary and that the first TXOP supports allocating to the neighboring AP.

Step S34, determining, by the third AP, whether the second transmission duration required for data transmission during the first TXOP is greater than the third transmission duration of the first TXOP.

In some embodiments, when data transmission during the first TXOP is necessary and the first TXOP supports allocating to the neighboring AP, the third AP may determine the second transmission duration required for data transmission during the first TXOP. Further, if the third AP determines that the second transmission duration is greater than the third transmission duration of the first TXOP, it executes step S35; and if the third AP determines that the second transmission duration is less than the third transmission duration of the first TXOP, it executes step S36.

Step S35: not responding to the first frame by the third AP.

Step S36: transmitting a second frame by the third AP, where the second frame indicates that the third AP requires the first AP to allocate the TXOP during the first TXOP.

In some embodiments, the third AP may transmit the second frame to the first AP.

The second frame indicates that the third AP requires the first AP to allocate the TXOP during the first TXOP. That is, the third AP requires performing data transmission through the TXOP allocated by the first AP.

In some embodiments, the second frame may further include a second information field, which indicates the second transmission duration required by the third AP to perform data transmission during the first TXOP.

In other words, for the first AP, the first AP may receive second frames sent by each neighboring AP, and each of the second frames indicates whether the respective neighbor requires the first AP to allocate the TXOP during the first TXOP for data transmission.

Similarly, each of the second frames may also include a second information field, which indicates the second transmission duration required by the respective neighboring AP to transmit data during the first TXOP.

Step S37: transmitting a MU-RTS TXS Trigger frame by the first AP. The MU-RTS TXS Trigger frame includes the TXOPs allocated by the first AP to at least one second AP. The MU-RTS TXS Trigger frame instructs the neighboring AP to transmit data according to the TXOP allocated to each second AP.

In some embodiments, after receiving a second frame from at least one second AP, the first AP may send the MU-RTS TXS Trigger frame, which is used to allocate the TXOP to each second AP.

The MU-RTS TXS Trigger frame further instructs each neighboring AP to transmit data according to the TXOP allocated by the first AP (to each second AP).

Each second AP is a neighboring AP that requires performing data transmission during the first TXOP of the first AP.

The second transmission duration required by each second AP to transmit data during the first TXOP is less than the third transmission duration of the first TXOP.

Each second AP may be referred to as a Shared AP.

In some embodiments, the MU-RTS TXS Trigger frame may include at least one user information field (User Info field), each User Info field corresponding to a second AP.

Each User Info field includes an Allocation Duration field, and each Allocation Duration field indicates a first transmission duration of the TXOP allocated to a second AP.

The first transmission duration indicated by the allocation duration field in each User Info field is greater than or equal to a second transmission duration required by the second AP corresponding to the User Info field to transmit data in the first TXOP.

The first transmission duration indicated by the allocation duration field in each User Info field is less than a third transmission duration of the first TXOP.

In some embodiments, each User Info field may also indicate other parameter information of the TXOP allocated to one of the second APs through at least one other information field, such as indicating the start time of the TXOP allocated to one of the second APs.

In some embodiments, the first AP may transmit the MU-RTS TXS Trigger frame subsequent to a Short Interframe Space (SIFS) after receiving the second frame sent by each second AP.

Step S38: determining, by the third AP, whether the MU-RTS TXS Trigger frame allocates the TXOP to the third AP.

In some embodiments, after receiving the MU-RTS TXS Trigger frame, the third AP may determine whether the first AP allocates the TXOP to the third AP via the MU-RTS TXS Trigger frame.

If the third AP does not respond to the first frame sent by the first AP, it may be determined that the MU-RTS TXS Trigger frame does not allocate the TXOP to the third AP. If the third AP transmits a second frame to the first AP, it may be determined that the MU-RTS TXS Trigger frame allocates the TXOP to the third AP.

For example, if the first frame includes at least one user information field, and each user information field indicates the first transmission duration of the TXOP allocated to one of the second APs through an allocation duration field, after receiving the MU-RTS TXS Trigger frame, the third AP may determine whether the MU-RTS TXS Trigger frame includes the user information field corresponding to the third AP.

If the MU-RTS TXS Trigger frame includes the user information field corresponding to the third AP, the third AP determines that the MU-RTS TXS Trigger frame allocates the TXOP to the third AP. If the MU-RTS TXS Trigger frame does not include the user information field corresponding to the third AP, the third AP determines that the MU-RTS TXS Trigger frame does not allocate the TXOP to the third AP.

In some embodiments, if the third AP determines that the MU-RTS TXS Trigger frame allocates the TXOP to the third AP, it executes step S39. If the third AP determines that the MU-RTS TXS Trigger frame does not allocate the TXOP to the third AP, it executes step S310.

Step S39: performing, by the third AP, data transmission within a first transmission duration corresponding to the TXOP allocated by the first AP.

In some embodiments, the third AP may determine the first transmission duration of the TXOP allocated by the first AP to the third AP, thereby performing data transmission with the associated STA within the first transmission duration, and stopping data transmission after the first transmission duration ends.

The third AP may perform data transmission with the associated STA within a first transmission duration after receiving the MU-RTS TXS Trigger frame, or it may perform data transmission with the associated STA within a first transmission duration after receiving a trigger frame, where the trigger frame is sent by the first AP and used for instructing the third AP to perform data transmission.

In step S310, performing, by the third AP, no data transmission within the first transmission duration corresponding to each fourth AP, and stopping data transmission at the end of the first transmission duration corresponding to each fifth AP.

In some embodiments, each fourth AP is an AP whose communication range overlaps with that of the third AP among the various second APs, and each fifth AP is an AP whose communication range does not overlap with that of the third AP among the various second APs.

In some embodiments, the third AP performs no data transmission within the first transmission duration corresponding to each fourth AP.

The third AP may determine the first transmission duration corresponding to each fourth AP based on the user information field in the MU-RTS TXS Trigger frame.

The third AP may reset the Network Allocation Vector (NAV) based on information in the Duration field of the MU-RTS TXS Trigger frame (such as the transmission duration of the MU-RTS TXS Trigger frame), so that the third AP does not transmit data in the first transmission duration corresponding to each fourth AP.

In some embodiments, the third AP terminates data transmission at the end of the first transmission duration corresponding to each fifth AP.

The third AP may determine the first transmission duration corresponding to each fifth AP based on the user information field in the MU-RTS TXS Trigger frame, and maintain the current NAV until the end of the first transmission duration corresponding to each fifth AP. The NAV is reset at the end of the first transmission duration corresponding to each fifth AP, so that the third AP terminates data transmission at the end of the first transmission duration corresponding to the fifth AP.

The communication method involved in the embodiments of the present disclosure may include at least one of the foregoing steps and embodiments. For example, any one of steps S31-S310 may be implemented as an independent embodiment, and the combination of any number of steps among steps S31-S310 may be implemented as an independent embodiment, but is not limited thereto.

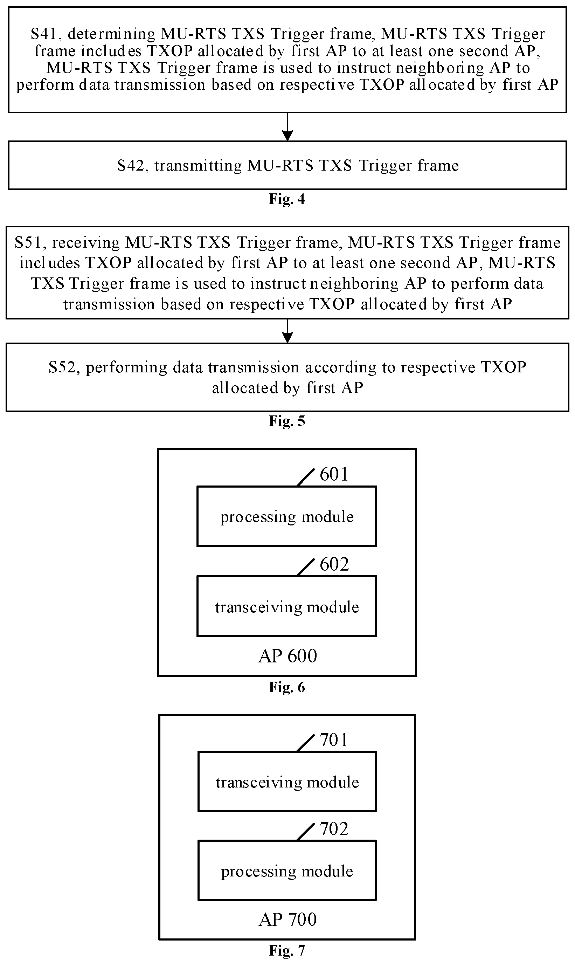

Fig. 4 is a flowchart of a communication method shown in an embodiment of the present disclosure. As shown in Fig. 4, the method is performed by a first AP and includes steps S41 and S42.

Step S41: determining a MU-RTS TXS Trigger frame. The MU-RTS TXS Trigger frame includes a TXOP allocated by the first AP to at least one second AP. The MU-RTS TXS Trigger frame is used to instruct the neighboring AP to perform data transmission based on the respective TXOP allocated by the first AP.

In some embodiments, the first AP is the holder of a first TXOP, and the first AP may be referred to as a Sharing AP. The first AP may allocate a TXOP during the held first TXOP to at least one second AP.

The MU-RTS TXS Trigger frame may be used to allocate a TXOP to each second AP, and the MU-RTS TXS Trigger frame is also used to instruct each neighboring AP to perform data transmission based on the TXOP allocated by the first AP (to each second AP).

Each second AP is a neighboring AP that requires performing data transmission during the first TXOP of the first AP.

The second transmission duration required by each second AP to perform data transmission during the first TXOP is less than the third transmission duration of the first TXOP.

Each second AP may be referred to as a Shared AP.

In some embodiments, the MU-RTS TXS Trigger frame may include at least one user information field (User Info field), each User Info field corresponding to one of the seconds AP.

Each User Info field includes an Allocation Duration field, and each Allocation Duration field indicates the first transmission duration of the TXOP allocated to one of the seconds AP.

The first transmission duration indicated by the allocation duration field in each User Info field is greater than or equal to the second transmission duration required by the second AP corresponding to the User Info field to transmit data in the first TXOP.

The first transmission duration indicated by the allocation duration field in each User Info field is less than the third transmission duration of the first TXOP.

In some embodiments, each User Info field may also indicate other parameter information of the TXOP allocated to one of the seconds AP through at least one other information field, such as indicating the start time of the TXOP allocated to one of the second APs through another information field.

Step S42: transmitting the MU-RTS TXS Trigger frame.

In some embodiments, after determining the MU-RTS TXS Trigger frame, the first AP transmits the MU-RTS TXS Trigger frame to all the neighboring APs.

In some embodiments, before determining the MU-RTS TXS Trigger frame, the first AP may transmit a first frame to each neighboring AP. The first frame is used to discover whether a neighboring AP requires the first AP to allocate the TXOP during the first TXOP.

That is, the first AP may use the first frame to discover whether a neighboring AP requires the first AP to allocate the TXOP during the first TXOP, thus identifying the neighboring AP that requires the first AP to allocate the TXOP with it for data transmission.

For example, the first frame may include at least one of a first information field and a first identifier.

The first information field indicates the third transmission duration of the first TXOP.

The first identifier indicates, through a first value, that the first TXOP supports allocating to the neighboring AP. That is, the first value indicates that a portion of the third transmission duration of the first TXOP may be allocated to the neighboring AP. The first identifier also indicates, through a second value, that the first TXOP does not support allocating to the neighboring AP. That is, the second value indicates that the third transmission duration of the first TXOP is not allowed to be allocated to the neighboring AP.

The first and second values may be different. For example, the first value may be 1 and the second value may be 0, which is not limited here.

For example, the first identifier may be the AP-2-AP TXS identifier, or it may be any other identifier in the first frame, which is not limited here.

In some embodiments, after transmitting the first frame, the first AP may receive a second frame sent by a neighboring AP.

For any second frame, the second frame is sent by the corresponding neighboring AP to the first AP after receiving the first frame, provided that the following conditions are met: it is determined that data transmission is required during the first TXOP; it is determined that the first TXOP supports allocating to the neighboring AP; and the second transmission duration of the data transmission performed by the neighboring AP during the first TXOP is less than the third transmission duration of the first TXOP.

For example, each second frame may also include a second information field, which indicates the second transmission duration required by the corresponding neighboring AP to transmit data during the first TXOP.

In some embodiments, after receiving at least one second frame, the first AP may consider the neighboring AP that sents the second frame as a second AP, thereby determining and transmitting an MU-RTS TXS Trigger frame to allocate TXOPs to each of the second APs. Simultaneously, the MU-RTS TXS Trigger frame instructs each neighboring AP to perform data transmission according to the TXOPs allocated by the first AP.

In some embodiments, the first AP may transmit the MU-RTS TXS Trigger frame subsequent to a Short Interframe Space (SIFS) after receiving each of the second frames.

The communication method involved in the embodiments of the present disclosure may include at least one of the foregoing steps and embodiments. For example, any one of steps S41-S42 may be implemented as an independent embodiment, but is not limited thereto.

Fig. 5 is another flowchart of a communication method shown in an embodiment of the present disclosure. As shown in Fig. 5, the method is performed by a third AP and includes steps S51 and S52.

Step S51: receiving a MU-RTS TXS Trigger frame. The MU-RTS TXS Trigger frame includes a TXOP allocated by the first AP to at least one second AP. The MU-RTS TXS Trigger frame is used to instruct the neighboring AP to perform data transmission based on the respective TXOPs allocated by the first AP.

In some embodiments, the first AP is the holder of the first TXOP, and the first AP may be referred to as a Sharing AP. The first AP may allocate a TXOP during the held first TXOP to at least one second AP. The third AP may be any neighboring AP of the first AP.

The MU-RTS TXS Trigger frame may be used to allocate a TXOP to each second AP, and the MU-RTS TXS Trigger frame is also used to instruct each neighboring AP to perform data transmission based on the TXOP allocated by the first AP (to each second AP).

Each second AP is a neighboring AP that requires performing data transmission during the first TXOP of the first AP.

The second transmission duration required by each second AP to perform data transmission during the first TXOP is less than the third transmission duration of the first TXOP.

Each second AP may be referred to as a Shared AP.

In some embodiments, the MU-RTS TXS Trigger frame may include at least one user information field (User Info field), each User Info field corresponding to one of the second APs.

Each User Info field includes an Allocation Duration field, and each Allocation Duration field indicates the first transmission duration of a TXOP allocated to one of the second APs.

The first transmission duration indicated by the allocation duration field in each User Info field is greater than or equal to a second transmission duration required by the second AP corresponding to the User Info field to perform data transmission during the first TXOP.

The first transmission duration indicated by the allocation duration field in each User Info field is less than a third transmission duration of the first TXOP.

In some embodiments, each User Info field may also indicate other parameter information of the TXOP allocated to one of the second APs through at least one other information field, such as indicating the start time of the TXOP allocated to one of the second APs through another information field.

Step S52: performing data transmission according to the respective TXOPs allocated by the first AP.

In some embodiments, after receiving the MU-RTS TXS Trigger frame, the third AP may determine whether the first AP allocates the TXOP to it via the MU-RTS TXS Trigger frame.

For example, if the first frame includes at least one user information field, and each user information field indicates a first transmission duration of the TXOP allocated to one of the second APs via an allocation duration field, after receiving the MU-RTS TXS Trigger frame, the third AP may determine whether the MU-RTS TXS Trigger frame includes the user information field corresponding to the third AP.

If the MU-RTS TXS Trigger frame includes the user information field corresponding to the third AP, the third AP determines that the MU-RTS TXS Trigger frame allocates the TXOP to it. If the MU-RTS TXS Trigger frame does not include the user information field corresponding to the third AP, the third AP determines that the MU-RTS TXS Trigger frame does not allocate the TXOP to it.

In some embodiments, if the third AP determines that the MU-RTS TXS Trigger frame allocates the TXOP to it, the third AP performs data transmission within the first transmission duration corresponding to the TXOP allocated by the first AP.

That is, the third AP may determine the first transmission duration of the TXOP allocated by the first AP to it, and thus perform data transmission with the associated STA within the first transmission duration, and stop transmitting data after the first transmission duration ends.

Specifically, the third AP may perform data transmission with the associated STA within the first transmission duration after receiving the MU-RTS TXS Trigger frame, or it may perform data transmission with the associated STA within the first transmission duration after receiving a trigger frame, where the trigger frame is sent by the first AP and used for instructing the third AP to perform data transmission.

In some embodiments, if the third AP determines that the MU-RTS TXS Trigger frame does not allocate the TXOP to the third AP, it will not transmit data within the first transmission duration corresponding to each fourth AP, and will stop transmitting data when the first transmission duration corresponding to each fifth AP ends.

Each fourth AP is an AP whose communication range overlaps with that of the third AP among the various second APs, and each fifth AP is an AP whose communication range does not overlap with that of the third AP among the various second APs.

Specifically, the third AP does not transmit data within the first transmission duration corresponding to each fourth AP.

The third AP may determine the first transmission duration corresponding to each fourth AP based on the user information field in the MU-RTS TXS Trigger frame.

The third AP may reset the Network Allocation Vector (NAV) based on information in the Duration field of the MU-RTS TXS Trigger frame (such as the transmission duration of the MU-RTS TXS Trigger frame), so that the third AP does not transmit data during the first transmission duration corresponding to each fourth AP.

Specifically, the third AP terminates data transmission at the end of the first transmission duration corresponding to each fifth AP.

The third AP may determine the first transmission duration corresponding to each fifth AP based on the user information field in the MU-RTS TXS Trigger frame, and maintain the current NAV until the end of the first transmission duration corresponding to each fifth AP. The NAV is reset at the end of the first transmission duration corresponding to each fifth AP, so that the third AP terminates data transmission at the end of the first transmission duration corresponding to the fifth AP.

In some embodiments, the third AP may also receive a first frame sent by the first AP before receiving the MU-RTS TXS Trigger frame.

The first frame is used to discover whether a neighboring AP requires the first AP to allocate the TXOP during the first TXOP, i.e., to determine the neighboring AP which requires the first AP to allocate the TXOP to it for data transmission.

In some embodiments, the first frame may include at least one of a first information field and a first identifier.

The first information field indicates the third transmission duration of the first TXOP.

The first identifier indicates, through a first value, that the first TXOP supports allocating to the neighboring AP, i.e., the first value indicates that a portion of the third transmission duration of the first TXOP may be allocated to the neighboring AP. The first identifier also indicates, through a second value, that the first TXOP does not support allocating to the neighboring AP, i.e., the second value indicates that the third transmission duration of the first TXOP is not allowed to be allocated to the neighboring AP.

The first and second values may be different. For example, the first value may be 1 and the second value may be 0, which is not limited here.

For example, the first identifier may be the AP-2-AP TXS identifier, or it may be other identifiers in the first frame, which is not limited here.

In some embodiments, after receiving the first frame, the third AP requires performing the following operations:
determining whether data transmission should be performed during the first TXOP, i.e., determining whether the first AP is required to allocate the TXOP to the third AP during the first TXOP, for performing data transmission based on the TXOP allocated by the first AP;
determining whether the first TXOP supports allocating to the neighboring AP, i.e., determining whether the first AP supports allocating the TXOP to the neighboring AP during the first TXOP;
determining whether the second transmission duration required for data transmission during the first TXOP is greater than the third transmission duration of the first TXOP.

When determining whether the first TXOP supports allocating to the neighboring AP, the third AP may determine the identification value of the first identifier in the first frame. If the identification value of the first identifier is a first value, the third AP determines that the first TXOP supports allocating to the neighboring APs. If the identification value of the first identifier is a second value, the third AP determines that the first TXOP does not support allocating to any neighboring AP.

If the third AP determines that data transmission is not required during the first TXOP, and/or determines that the first TXOP does not support allocating to the neighboring AP, and/or the second transmission duration required for data transmission during the first TXOP is less than the third transmission duration of the first TXOP, the third AP does not respond to the first frame. If the third AP determines that data transmission is required during the first TXOP, determines that the first TXOP supports allocating to the neighboring AP, and determines that the second transmission duration required for data transmission during the first TXOP is less than the third transmission duration of the first TXOP, the third AP transmits a second frame to the first AP. The second frame indicates that the third AP requires the first AP to allocate the TXOP during the first TXOP.

For example, the second frame may further include a second information field, which indicates the second transmission duration required by the third AP to transmit data during the first TXOP.

In other words, for the first AP, the first AP may receive second frames sent by each neighboring AP, and each second frame indicates whether the corresponding neighbor requires the first AP to allocate the TXOP during the first TXOP for data transmission.

Similarly, each second frame may also include a second information field, and the second information field in each second frame indicates the second transmission duration required by the corresponding neighboring AP to transmit data during the first TXOP.

The communication method involved in the embodiments of the present disclosure may include at least one of the foregoing steps and embodiments. For example, any one of steps S51-S352 may be implemented as an independent embodiment, and the combination of any number of steps among steps S51-S52 may be implemented as an independent embodiment, but is not limited thereto.

Fig. 6 is a schematic structural diagram of an AP proposed in an embodiment of the present disclosure. As shown in Fig. 6, AP 600 may include: a processing module 601 and a transceiving module 602.

In some embodiments, the processing module 601 is configured to determine a MU-RTS TXS Trigger frame. The MU-RTS TXS Trigger frame includes a TXOP allocated by a first AP to at least one second AP. The MU-RTS TXS Trigger frame is used to instruct the neighboring AP to perform data transmission according to the respective TXOPs allocated by the first AP. The second AP is a neighboring AP that requires performing data transmission during the first TXOP of the first AP.

The transceiving module 602 is configured to transmit the MU-RTS TXS Trigger frame.

For example, the transceiving module 602 is configured to perform at least one of the transceiving steps performed by the first AP in any of the above methods (e.g., steps S31, S37, S42, but not limited thereto), which will not be elaborated here.

For example, the processing module 601 is configured to perform at least one of the processing steps performed by the first AP in any of the above methods (e.g., step S41, but not limited thereto), which will not be elaborated here.

Fig. 7 is a schematic structural diagram of an AP proposed in an embodiment of the present disclosure. As shown in Fig. 7, AP 700 may include a transceiving module 701 and a processing module 702.

In some embodiments, the transceiving module 701 is configured to receive the MU-RTS TXS Trigger frame. The MU-RTS TXS Trigger frame includes TXOPs allocated by a first AP to at least one second AP. The MU-RTS TXS Trigger frame is used to instruct the neighboring AP to perform data transmission according to the respective TXOPs allocated by the first AP. Each second AP is a neighboring AP that requires performing data transmission during the first TXOP of the first AP.

The processing module 702 is configured to perform data transmission according to the respective TXOPs allocated by the first AP.

For example, the transceiving module 701 is configured to perform at least one of the transceiving steps performed by the third AP in any of the above methods (e.g., steps S36, S51, but not limited thereto), which will not be elaborated further here.

For example, the processing module 702 is configured to perform at least one of the processing steps performed by the third AP in any of the above methods (e.g., steps S32-S35, S38-S310, step S52, but not limited thereto), which will not be elaborated further here.

It should be understood that the above division of units or modules is only a logical functional division. In actual implementations, they may be fully or partially integrated into a single physical entity, or they may be physically separated. Furthermore, units or modules may be implemented in the form of processor calling software. For example, a processor is included, and the processor is connected to a memory, the memory storing instructions. The processor calls the instructions stored in the memory to implement any of the above methods or to implement the functions of the above units or modules. The processor is, for example, a general-purpose processor, such as a Central Processing Unit (CPU) or a microprocessor, and the memory is internal or external to the device. Alternatively, the units or modules in the device may be implemented in the form of hardware circuits. The functionality of some or all of the units or modules may be achieved through the design of these hardware circuits, which may be understood as one or more processors. For example, in one implementation, the hardware circuit is an application-specific integrated circuit (ASIC). The functionality of some or all of the units or modules is achieved through the design of the logical relationships between the components within the circuit. In another implementation, for example, the hardware circuit may be implemented using a programmable logic device (PLD). Taking a field programmable gate array (FPGA) as an example, it may include a large number of logic gates. The connection relationships between the logic gates are configured through configuration files, thereby achieving the functionality of some or all of the units or modules. All the units or modules of the above device may be implemented entirely through the processor-called software, entirely through the hardware circuits, or partially through the processor-called software with the remaining parts implemented through the hardware circuits.

In the embodiments of the present disclosure, the processor is a circuit with signal processing capabilities. In one implementation, the processor may be a circuit with instruction read and execute capabilities, such as a Central Processing Unit (CPU), a microprocessor, a graphics processing unit (GPU) (which may be understood as a microprocessor), or a digital signal processor (DSP). In another implementation, the processor may implement certain functions through the logical relationships among hardware circuits. The logical relationships among the aforementioned hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit may be understood as the process of the processor loading instructions to implement the functions of some or all of the above units or modules. Furthermore, it may also be a hardware circuit designed for artificial intelligence, which may be understood as an ASIC, such as a Neural Network Processing Unit (NPU), a Tensor Processing Unit (TPU), a Deep Learning Processing Unit (DPU), etc.

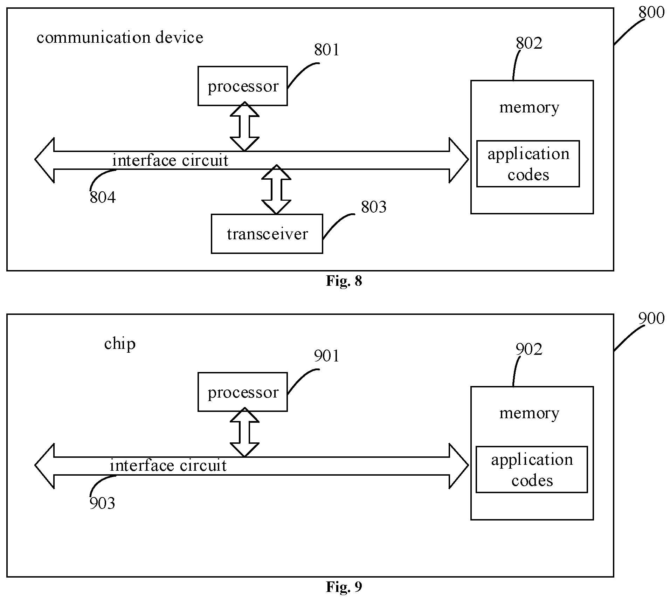

Fig. 8 is a schematic structural diagram of a communication device proposed in an embodiment of the present disclosure. The communication device 800 may be a first AP or a third AP, or a chip, chip system, or processor that supports the first AP or the third AP in implementing any of the above methods. The communication device may be used to implement the methods described in the above method embodiments. For details, references may be made to the descriptions in the above method embodiments.

As shown in Fig. 8, the communication device 800 includes one or more processors 801. The processor 801 may be a general-purpose processor or a dedicated processor, such as a baseband processor or a central processor. The baseband processor may be used to process communication protocols and communication data. The central processor may be used to control communication devices (e.g., base station, baseband chip, terminal device, terminal device chip, DU, or CU, etc.), execute programs, and process program data. The communication device 800 is configured to perform any of the above methods.

In some embodiments, the communication device 800 further includes one or more memories 802 for storing instructions. For example, all or part of the memory 802 may be located outside the communication device 800.

In some embodiments, the communication device 800 further includes one or more transceivers 803. When the communication device 800 includes one or more transceivers 803, the transceiver 803 performs at least one of the communication steps such as transmitting and/or receiving in the above-described methods (e.g., steps S31, S36-S37, S42, S51, but not limited thereto), and the processor 801 performs at least one of other steps (e.g., steps S32-S35, S38-S310, S41, S52, but not limited thereto).

In some embodiments, the transceiver may include a receiver and/or a transmitter, which may be separate or integrated. For example, the terms transceiver, transceiving unit, transceiving machine, transceiving circuit, etc., may be used interchangeably; the terms transmitter, transmitting unit, transmitting machine, transmitting circuit, etc., may be used interchangeably; and the terms receiver, receiving unit, receiving machine, receiving circuit, etc., may be used interchangeably.

In some embodiments, the communication device 800 may include one or more interface circuits 804. For example, the interface circuit 804 is connected to the memory 802. The interface circuit 804 may be used to receive signals from the memory 802 or other devices, and may be used to send signals to the memory 802 or other devices. For example, the interface circuit 804 may read instructions stored in the memory 802 and send the instructions to the processor 801.

The communication device 800 described in the above embodiments may be an AP or a STA, but the scope of the communication device 800 described in the present disclosure is not limited thereto, and the structure of the communication device 800 is not limited to Fig. 7. The communication device may be a standalone device or part of a larger device. For example, the above-mentioned communication device may be: (1) a standalone integrated circuit IC, or chip, or chip system or subsystem; (2) a collection of one or more ICs, for example, the above-mentioned IC collection may also include storage components for storing data and programs; (3) an ASIC, such as a modem; (4) a module that may be embedded in other devices; (5) a receiver, terminal device, smart terminal device, cellular phone, wireless device, handheld device, mobile unit, vehicle device, network device, cloud device, artificial intelligence device, etc.; (6) others, etc.

Fig. 9 is a schematic structural diagram of a chip 900 proposed according to an embodiment of the present disclosure. The chip 900 includes one or more processors 901, and is configured to perform any of the methods described above.

In some embodiments, the chip 900 further includes one or more interface circuits 903. For example, the interface circuit 903 is connected to a memory 902. The interface circuit 903 may be used to receive signals from the memory 902 or other devices, and may also be used to send signals to the memory 902 or other devices. For example, the interface circuit 903 may read instructions stored in the memory 902 and send those instructions to the processor 901.

In some embodiments, the interface circuit 903 performs at least one of the communication steps such as transmitting and/or receiving in the above methods (e.g., steps S31, S36-S37, S42, S51, but not limited thereto), and the processor 1001 performs at least one of other steps (e.g., steps S32-S35, S38-S310, S41, S52, but not limited thereto).

In some embodiments, terms such as interface circuit, interface, transceiving pin, transceiver, etc. are interchangeable.

In some embodiments, the chip 900 further includes one or more memories 902 for storing instructions. For example, all or part of the memory 902 may be located outside the chip 900.

The present disclosure also proposes a storage medium storing instructions. When the instructions are executed on the communication device 800, the communication device 800 is caused to perform any of the above methods. For example, the storage medium is an electronic storage medium. For example, the storage medium is a computer-readable storage medium, but is not limited thereto. It may also be a storage medium readable by other devices. For example, the storage medium may be a non-transitory storage medium, but is not limited thereto. It may also be a temporary storage medium.

The present disclosure also proposes a program product. When the program product is executed by the communication device 800, the communication device 800 is caused to perform any of the above methods. For example, the program product is a computer program product.

The present disclosure also proposes a computer program. When the computer program is executed on a computer, the computer is caused to perform any of the above methods. The above description is merely an example embodiment of the present disclosure and an explanation of the technical principles employed. Those skilled in the art should understand that the scope of the present disclosure is not limited to the technical solutions formed by specific combinations of the above-described technical features, but should also cover other technical solutions formed by arbitrary combinations of the above-described technical features or their equivalents without departing from the above-described concept, such as the technical solutions formed by substituting the above features with (but not limited to) technical features having similar functions disclosed in the present disclosure.

## Claims

1. A communication method, comprising:
determining, by a first Access Point (AP), a Multi-User Request to Send Transmission Opportunity (TXOP) Sharing (MU-RTS TXS) Trigger frame, wherein the MU-RTS TXS Trigger frame comprises a TXOP of the first AP allocated to at least one second AP, the MU-RTS TXS Trigger frame is used to instruct a neighboring AP to perform data transmission according to the TXOP allocated by the first AP, and the second AP is a neighboring AP that requires performing data transmission during a first TXOP of the first AP; and
transmitting, by the first AP, the MU-RTS TXS Trigger frame.

2. The method according to claim 1, wherein
the MU-RTS TXS Trigger frame comprises at least one user information field, wherein each of said user information field comprises an allocation duration field, and each of said allocation duration field indicates a first transmission duration of the TXOP allocated to one of the at least one second AP; and
the first transmission duration corresponding to each of the at least one second AP is greater than or equal to a second transmission duration required by a respective second AP to perform data transmission during the first TXOP, and the first transmission duration and the second transmission duration corresponding to each of the at least one second AP are less than a third transmission duration of the first TXOP.

3. The method according to claim 1 or 2, further comprising:
transmitting, by the first AP, a first frame, wherein the first frame is used to discover whether a neighboring AP requires the first AP to allocate the TXOP during the first TXOP, wherein
the first frame comprises at least one of:
a first information field, wherein the first information field indicates a third transmission duration, and the third transmission duration is a remaining transmission duration of the first TXOP when the first AP transmits the first frame; or
a first identifier, wherein the first identifier indicates, through a first value, that the first TXOP supports allocating to a neighboring AP, and through a second value, that the first TXOP does not support allocating to any neighboring AP.

4. The method according to claim 3, further comprising:
receiving, by the first AP, a second frame transmitted by the at least one second AP, wherein each of the second frame indicates that a respective neighboring AP requires the first AP to allocate the TXOP during the first TXOP.

5. The method according to claim 4, wherein
each of the second frame comprises a second information field, and the second information field indicates a second transmission duration required by a respective second AP to perform data transmission during the first TXOP.

6. The method according to claim 4, wherein transmitting, by the first AP, the MU-RTS TXS Trigger frame comprises:
after receiving the second frame transmitted by each of the at least one second AP, transmitting, by the first AP, the MU-RTS TXS Trigger frame subsequent to a Short Interframe Space (SIFS).

7. A communication method, comprising:
receiving, by a third Access Point (AP), a Multi-User Request to Send Transmission Opportunity (TXOP) Sharing (MU-RTS TXS) Trigger frame, wherein the MU-RTS TXS Trigger frame comprises a TXOP allocated by a first AP to at least one second AP, the MU-RTS TXS Trigger frame is used to instruct a neighboring AP to perform data transmission according to the TXOP allocated by the first AP, each of the at least one second AP is a neighboring AP that requries performing data transmission during a first TXOP of the first AP, and the third AP is any neighboring AP of the first AP; and
performing, by the third AP, data transmission according to the TXOP allocated by the first AP.

8. The method according to claim 7, wherein
the MU-RTS TXS Trigger frame comprises at least one user information field, each of said user information field comprises an allocation duration field, and each of said allocation duration field indicates a first transmission duration of the TXOP allocated to one of the at least one second AP; and
the first transmission duration corresponding to each of the at least one second AP is greater than or equal to a second transmission duration required by a respective second AP to perform data transmission during the first TXOP, and the first transmission duration and the second transmission duration corresponding to each of the at least one second AP are less than a third transmission duration of the first TXOP.

9. The method according to claim 7, wherein performing, by the third AP, data transmission according to the TXOP allocated by the first AP, comprises:
in response to the first AP allocating the TXOP to the third AP, performing, by the third AP, data transmission during a first transmission duration of the TXOP allocated by the first AP to the third AP, and performing, by the third AP, no data transmission outside the respective first transmission duration;
in response to the first AP not allocating the TXOP to the third AP, and a communication range of the third AP overlapping with a communication range of at least one fourth AP among the at least one second AP, performing, by the third AP, no data transmission during the first transmission duration corresponding to each of the at least one fourth AP;
in response to the first AP not allocating the TXOP to the third AP, and the communication range of the third AP not overlapping with the communication range of at least one fifth AP among the at least one second AP, stopping, by the third AP, data transmission at an end of the first transmission duration corresponding to each of the at least one fifth AP.

10. The method according to claim 7 or 8, further comprising:
receiving, by the third AP, a first frame, wherein the first frame is used to discover whether a neighboring AP requires the first AP to allocate the TXOP during the first TXOP, wherein the first frame comprises at least one of:
a first information field, wherein the first information field indicates a third transmission duration, and the third transmission duration is a remaining transmission duration of the first TXOP when the first AP transmits the first frame; or
a first identifier, wherein the first identifier indicates, through a first value, that the first TXOP supports allocating to a neighboring AP, and through a second value, that the first TXOP does not support allocating to any neighboring AP.

11. The method according to claim 10, further comprising:
in response to the third AP not requiring performing data transmission during the first TXOP, not responding to the first frame by the third AP;
in response to the third AP requiring performing data transmission during the first TXOP, and in response to the first TXOP not supporting allocating to any neighboring AP, or the second transmission duration required by the third AP to perform data transmission during the first TXOP being greater than the third transmission duration of the first TXOP, not responding to the first frame by the third AP;
in response to the third AP requiring performing data transmission during the first TXOP, and in response to the first TXOP supporting allocating to a neighboring AP, and the second transmission duration required by the third AP to perform data transmission during the first TXOP being less than the third transmission duration of the first TXOP, transmitting, by the third AP, a second frame, wherein the second frame indicates that the third AP requires the first AP to allocate the TXOP during the first TXOP.

12. The method according to claim 11, wherein
the second frame comprises a second information field, and the second information field indicates the second transmission duration required by the third AP to perform data transmission during the first TXOP.

13. An Access Point (AP), comprising:
a processing module, configured to determine a Multi-User Request to Send Transmission Opportunity (TXOP) Sharing (MU-RTS TXS) Trigger frame, wherein the MU-RTS TXS Trigger frame comprises a TXOP allocated by a first AP to at least one second AP, the MU-RTS TXS Trigger frame is used to instruct a neighboring AP to perform data transmission according to the TXOP allocated by the first AP, and the second AP is a neighboring AP that requires performing data transmission during a first TXOP of the first AP; and
a transceiving module, configured to transmit the MU-RTS TXS Trigger frame.

14. An Access Point (AP), comprising:
a transceiving module, configured to receive a Multi-User Request to Send Transmission Opportunity (TXOP) Sharing (MU-RTS TXS) Trigger frame, wherein the MU-RTS TXS Trigger frame comprises a TXOP allocated by a first AP to at least one second AP, the MU-RTS TXS Trigger frame is used to instruct a neighboring AP to perform data transmission according to the TXOP allocated by the first AP, and each of the at least one second AP is a neighboring AP that requires performing data transmission during a first TXOP of the first AP; and
a processing module, configured to perform data transmission according to the TXOP allocated by the first AP.

15. An access point (AP), comprising one or more processors, wherein
the AP is configured to perform the communication method according to any one of claims 1-6 or 7-12.

16. A storage medium having instructions stored thereon, wherein when the instructions are executed on a communication device, the communication device is caused to perform the communication method according to any one of claims 1-6 or 7-12.
